# EUROPEAN PATENT APPLICATION

(11) **EP 4 289 497 A1**
(43) Date of publication of application: **13.12.2023**
(21) Application number: 22749939.9
(22) Date of filing: 26.01.2022
(51) Int. Cl.: B01D 47/06, B01D 47/10, B05B 1/02, B01D 53/78

(54) **VENTURI-TYPE COMPOSITE NOZZLE DEVICE FOR SUCTIONING AND REMOVING AIR POLLUTANTS**

(30) Priority: 08.02.2021 KR 20210017605; 07.07.2021 KR 20210089264
(71) Applicant: Kim, Jung Gyu, Seoul 06090 (KR)
(72) Inventor: KIM, Sung Woo, Osan-si, Gyeonggi-do 18132 (KR)
(74) Representative: Sander, Rolf
(86) International application number: PCT/KR2022/001401
(87) International publication number: WO 2022/169188

(57) **Abstract**

A venturi-type composite nozzle device for suctioning and removing air pollutants, of the present disclosure, suctions air pollutants in the vicinity thereof by using negative pressure formed through the venturi principle, and then mixes same with water, jets the mixed water and brings same into contact with the air pollutants again, so as to have a large adsorption ratio of air pollutants in comparison to the amount of water usage, and enables water to be reduced by that amount, and thus has excellent operating performance. The device comprises: a venturi-type intake casing which includes an inlet part, an outlet part, and a throttling part and which causes an internal pressure drop while water passes therethrough, thereby suctioning external air thereinto; an introducing-spray nozzle, which is provided at the inlet part of the intake casing and sprays water into the intake casing; and an impeller, which is provided at the outlet part of the intake casing, jets, to the outside of the outlet part, the water having passed through the intake casing, and applies centrifugal force to the water to expand a water-spraying radius.

## Description

### BACKGROUND

### 1. Technical Field

The present disclosure relates to a device for removing various pollutants floating in the atmosphere.

### 2. Related Art

Particulate pollutants, such as fine dust, scattering dust, floating harmful substances, and various odors, that deteriorate the atmospheric environment (hereinafter, referred to as "air pollutants") penetrate the human body through the respiratory system and cause various diseases.

In particular, large amounts of air pollutants are generated from cement factories, coal storage sites, excavation sites, open storage yards, building demolition sites, and the like, and their concentration is high. So, the health of nearby residents is greatly harmed, houses and cars get dirty, and rivers and soil are contaminated.

In order to alleviate the problems caused by such air pollutants, various dust abatement technologies have been proposed. Among them, there is also a method of collecting air pollutants in the vicinity of a work site with water drops by spraying water in the air using a watering vehicle or sprinkler.

However, the effect of the conventional watering device was not satisfactory. For example, a direct-type watering device enabling water to reach a long distance has a limitation in that it cannot properly remove fine floating dust because the water does not spread and the spraying area is narrow.

### SUMMARY

An object of the present disclosure, which has been conceived to address the above-mentioned problems, is to provide a device for removing air pollutants which has a high adsorption ratio of air pollutants to the amount of water used, is lightweight, has a high degree of installation freedom, is robust without any mechanical failure, and has a wide spraying range to effectively collect air pollutants.

In order to achieve the above object, the present disclosure provides a venturi-type composite nozzle device for suctioning and removing air pollutants, the device comprising: a venturi-type intake casing which includes an inlet part, an outlet part, and a throttling part, and which causes an internal pressure drop while water passes therethrough, thereby suctioning external air thereinto; an introducing-spray nozzle, which is provided at the inlet part of the intake casing and sprays water, which is supplied from the outside, into the intake casing; and an impeller which is provided at the outlet part of the intake casing, rotates by receiving kinetic energy of water having passed through the intake casing, jets the water to the outside of the outlet part, and applies centrifugal force to the water to expand a spray radius.

According to an embodiment of the disclosure, the intake casing may further include a swirl guide part installed therein which forms swirling flow by mixing the water sprayed from the introducing-spray nozzle and the suctioned air. The swirl guide part may have a shape of a ring obtained by pressing a strip-shaped member having a certain width, and may include a fixing band fixed to an inner wall surface of the intake casing, and a guide vane protruding inside the fixing band to guide a flow of fluid.

According to an embodiment of the disclosure, the introducing-spray nozzle may be fixed to the inlet part of the intake casing through a nozzle holder, and may include an outer circumferential helical groove formed on an outer circumferential surface thereof which guides a flow of air suctioned into the intake casing in a helical shape.

According to an embodiment of the disclosure, the introducing-spray nozzle may include a nozzle body having a coupling portion connected to an external water supply line and an inward extension portion integral with the coupling portion and extending into the intake casing, and a rotary plate which is rotated by receiving the pressure of water which has passed through the nozzle body.

According to an embodiment of the disclosure, a first venturi housing accommodating the intake casing and having an inlet part, an outlet part, and a throttling part, and a second venturi housing accommodating the first venturi housing and having an inlet part, an outlet part, and a throttling part may be installed in the outer side of the intake casing. In this regard, the impeller may be further installed at the outlet part of the second venturi housing to expand the spray radius by imparting centrifugal force to the jetted flow.

According to an embodiment of the disclosure, the impeller may include a center hub having a shaft hole, and a plurality of blades integrally formed on an outer circumference of the center hub and obtaining rotational force from the collision of water.

According to an embodiment of the disclosure, the device of the disclosure may further include an impeller support for supporting the impeller. The impeller support may include a support shaft inserted into the shaft hole to rotatably support the impeller, a first supporter fixed to the inside of the intake casing and supporting the support shaft, and a second supporter supporting the center hub of the impeller at the outlet part of the intake casing.

According to an embodiment of the disclosure, the second supporter may include a fixing ring which has a shape of a ring and is spaced apart from the outlet part so that a lateral passage is formed between the outlet part and the fixing ring, and which has a hub support at the center thereof for providing a supporting force to the center hub; and a plurality of spacing pins connecting the fixing ring to the intake casing.

The above-described present disclosure will become clearer through specific embodiments to be described below in conjunction with the accompanying drawings.

### EFFECT OF THE INVENTION

The venturi-type composite nozzle device for suctioning and removing air pollutants of the present disclosure realized as described above suctions ambient air pollutants using the negative pressure created by the venturi principle, mixes them with water, and jets the mixed water to be brought into contact with air pollutants again. Therefore, an adsorption ratio of air pollutants to the amount of water used is high, and thus, water can be saved to that extent, exhibiting a resultant excellent operation performance.

Additionally, since it does not have mechanical devices, such as a blower and the like, mounted therein, it is not only lightweight so as to provide a high degree of installation freedom, but it is also robust so as to avoid any mechanical failure.

Furthermore, since the jetted water is sprayed in a con-like shape by being subjected to the action of centrifugal force by the impeller, the spray range is wide, so it is possible to accomplish a fast, efficient, and effective air pollutant collection.

### BRIEF DESCRIPTION OF THE DRAWINGS

FIGS. 1 and 2A to 2C are diagrams showing usage examples of a venturi-type composite nozzle device for suctioning and removing air pollutants according to an embodiment of the present disclosure.
FIG. 3 is a perspective view of a venturi-type composite nozzle device for suctioning and removing air pollutants according to an embodiment of the present disclosure.
FIG. 4 is a cutaway perspective view for explaining the internal configuration of the composite nozzle device shown in FIG. 3.
FIG. 5 is a front view of the composite nozzle device of FIG. 3.
FIG. 6 is an enlarged perspective view of the inlet part of the composite nozzle device of FIG. 3.
FIG. 7 is an enlarged view of the outlet part of the composite nozzle device shown in FIG. 3.
FIG. 8 is a diagram separately showing the introducing-spray nozzle shown in FIG. 4.
FIG. 9 is a perspective view of the swirling flow guide band of FIG. 4.
FIGS. 10A to 10E are diagrams showing modified examples of a composite nozzle device according to an embodiment of the present disclosure.
FIG. 11 is a perspective view of the introducing-spray nozzle applicable to the composite nozzle device shown in FIG. 4.
FIG. 12 is a perspective view of the rotary plate of FIG. 11.
FIG. 13 is a plan view showing an introducing-spray nozzle having a different structure applicable to the composite nozzle device shown in FIG. 4.
FIG. 14 is a perspective view separately showing an impeller applicable to a composite nozzle device according to an embodiment of the present disclosure.
FIG. 15 is a side view showing a modified example of a venturi-type composite nozzle device for suctioning and removing air pollutants according to an embodiment of the present disclosure.
FIG. 16 is an exploded perspective view of the composite nozzle device shown in FIG. 15.
FIG. 17 is a view showing an inlet part of the composite nozzle device of FIG. 15.
FIG. 18 is a perspective view showing the outlet part of the composite nozzle device of FIG. 15.

### DETAILED DESCRIPTION

Hereinafter, preferred embodiments of the present disclosure will be described in detail with reference to the accompanying drawings. As used herein, the terms are for the purpose of describing the embodiments of the present disclosure, and are not intended to limit the present disclosure. Herein, terms in the singular form also relate to the plural form unless specifically stated otherwise. As used herein, the terms "comprise," "comprising," and the like are used to specify the presence of stated components, steps, operations, and/or elements, but do not preclude the presence or addition of one or more other components, steps, operations, and/or elements.

Basically, the venturi-type composite nozzle device of the present disclosure utilizes the venturi principle. That is, with the use of the negative pressure created when water is sprayed, ambient pollutants are suctioned in, and the suctioned pollutants are processed by being mixed with water. This composite nozzle device removes or abates air pollutants, and can be installed at a variety of locations. For example, it can be installed at a point where dust or particles are generated, such as a cement factory, a coal storage site, a blasting site, or an open storage yard.

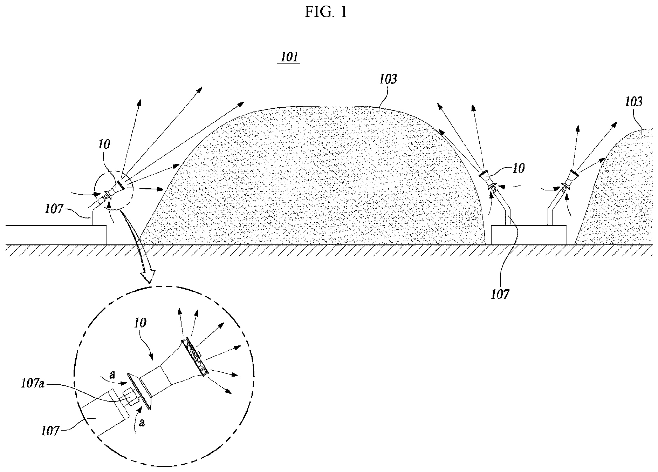

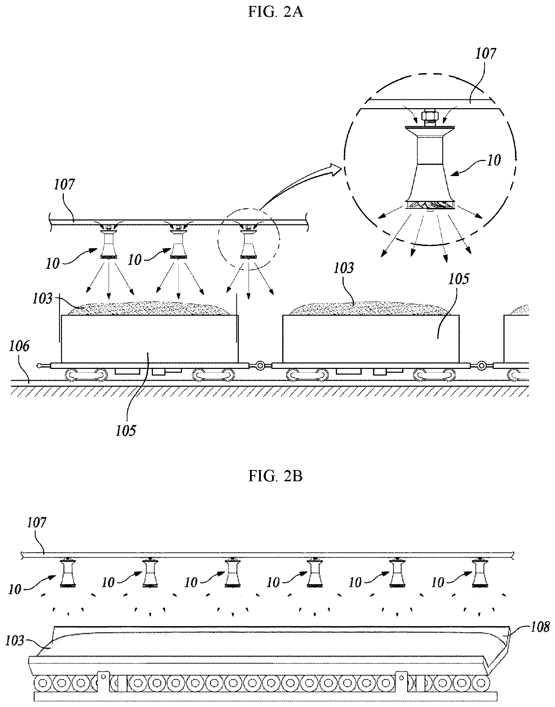

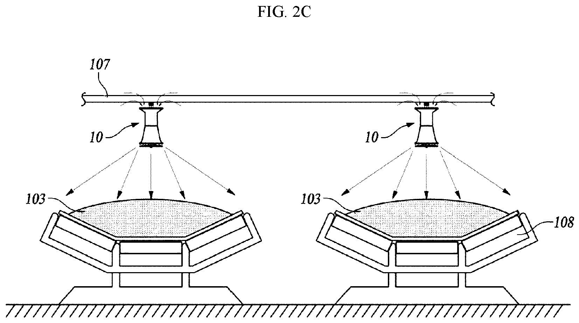

FIGS. 1, 2A, 2B, and 2C are diagrams showing usage examples of a venturi-type composite nozzle device for suctioning and removing air pollutants according to an embodiment of the present disclosure.

FIG. 1 shows a state in which a composite nozzle device 10 which is arranged in an open storage yard 101 where a pile of coal 103 is stored. The illustrated pile of coal 103 is an example of piles that generate air pollutants. Naturally, the composite nozzle device of this embodiment can be applied to piles of iron ore, ascon, gravel, sand, and various materials for civil engineering and construction besides coal. It will be appreciated that the pile of coal is illustrated in FIGS. 1 and 2 as a representative example among these piles.

As shown, a plurality of composite nozzle devices 10 are arranged around the pile of coal 103 stored in the open storage yard. The composite nozzle device 10 sprays toward the pile of coal 103 the water supplied through a water supply line 107 to prevent dust or coal powder from being scattered and blown off from the pile of coal, and also suctions ambient air to spray it toward the pile of coal 103. The ambient air has been already mixed with the air pollutants, such as, blown coal powder or dust, fine dust, and the like, so the air pollutants are sprayed onto the pile of coal after being mixed with the water. The coal powder of the air pollutants mixed with the water rejoins the pile of coal.

Reference numeral 107a refers to a coupling nut connecting the water supply line 107 to the composite nozzle device 10. Since the composite nozzle device 10 is installed using the coupling nut 107a, individual replacement or maintenance of the composite nozzle device 10 is possible.

FIG. 2A shows the case where the composite nozzle device 10 is installed above a railroad track 106.

Since the pile of coal 103 being moved loaded on a trailer 105 tends to be easily blown off by wind pressure due to the movement, the composite nozzle device 10 is arranged on the upper part of the movement path of the trailer 105 in order to prevent the coal powder from being blown off. The water sprayed from the composite nozzle device 10 wets the surface of the pile of coal 103, spreading in a shape of a cone with the ambient contaminants mixed therewith.

FIGS. 2B and 2C are diagrams illustrating the case where the pile of coal 103 is transported by a conveyor 108. Since the pile of coal 103 loaded on the conveyor 108 is also exposed to the atmosphere, it is susceptible to being blown off as the coal powder (i.e., air pollutants). However, such air pollutants can be effectively addressed by installing the composite nozzle device 10 on the upper part of the conveyor 108 and spraying water onto it.

Meanwhile, a surfactant may be mixed with the water sprayed by the composite nozzle device 10. Since the surfactant increases the mutual adhesion between the particles, the removal efficiency of contaminants can be further increased.

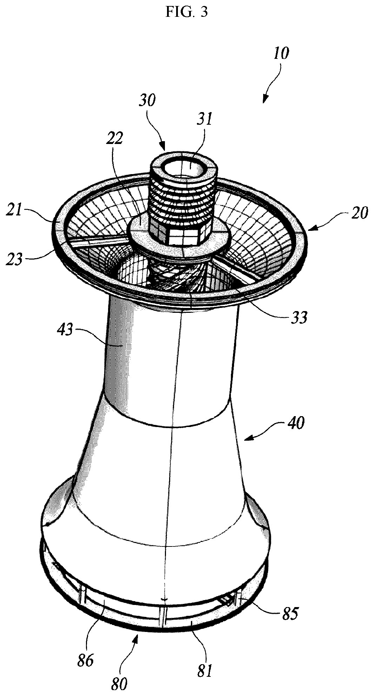

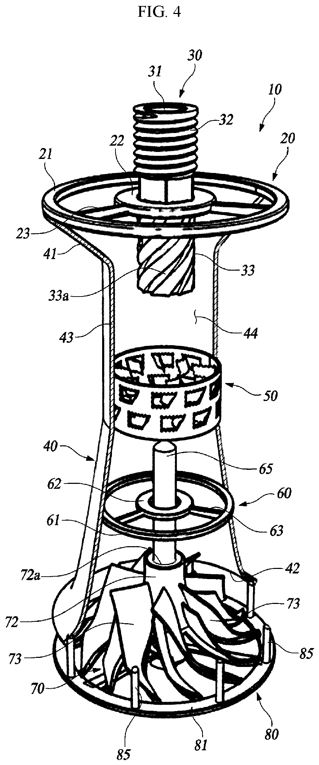

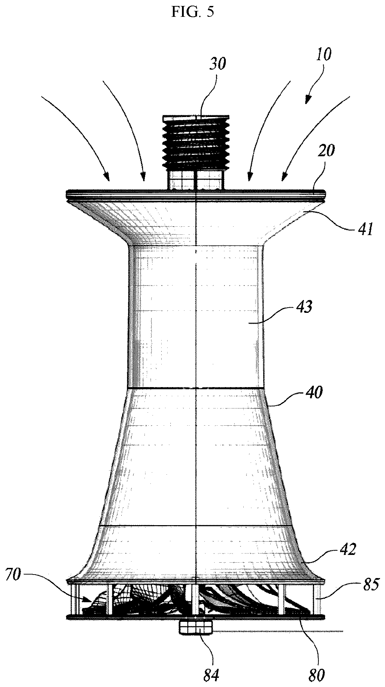

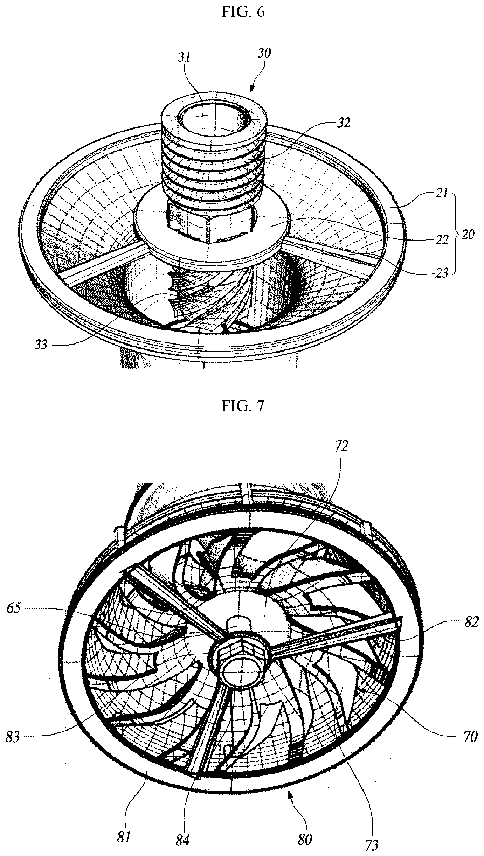

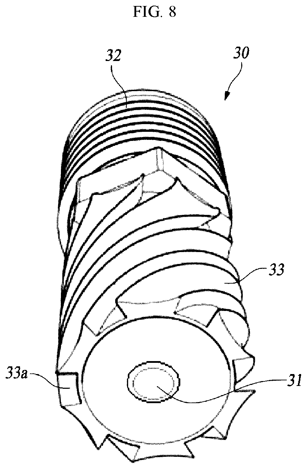

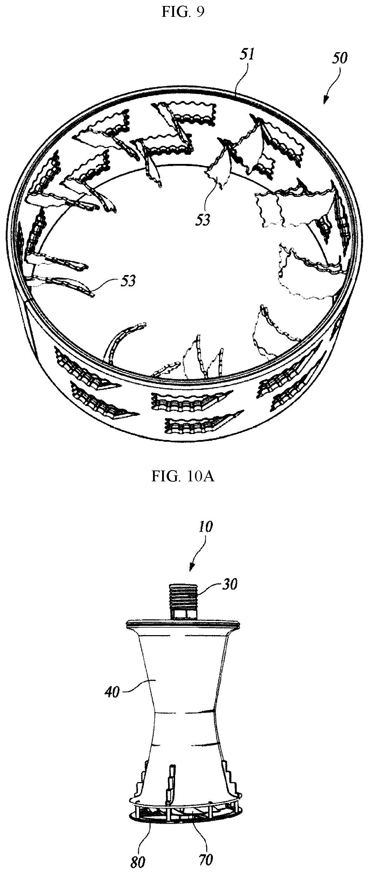

FIG. 3 is a perspective view of the venturi-type composite nozzle device 10 for suctioning and removing air pollutants according to an embodiment of the present disclosure, and FIG. 4 is a diagram for explaining the internal configuration of the composite nozzle device shown in FIG. 3. In addition, FIG. 5 is a front view of the composite nozzle device of FIG. 3, FIG. 6 is an enlarged perspective view of the inlet part of the composite nozzle device, and FIG. 7 is an enlarged view of the outlet part of the composite nozzle device. Also, FIG. 8 is a diagram separately showing the introducing-spray nozzle shown in FIG. 4, and FIG. 9 is a perspective view of the swirling flow guide band of FIG. 4.

As shown, the composite nozzle device 10 according to the present embodiment includes an intake casing 40, an introducing-spray nozzle 30, a nozzle holder 20, a swirl guide part 50, an impeller 70, and an impeller support.

The intake casing 40 has an inlet part 41, an outlet part 42, and a throttling part 43, and provides an internal passage 44 through which fluid passes. The inlet part 41 is a passage through which outside air containing air pollutants enters the internal passage 44. The internal passage 44 is a space in which the water sprayed from the introducing-spray nozzle 30 and the air introduced into the inlet part 41 are mixed, and the mixed fluid passes through the swirl guide part 50 and the impeller 70, and is jetted through the outlet part 42.

The throttling part 43 has its maximum diameter less than or equal to the minimum diameters of the inlet part 41 and the outlet part 42. Therefore, the water and air introduced through the inlet part 41 passes through the throttling part 43 and are accelerated therein, and then exits it to the outlet part. Since the pressure decreases as the velocity of the fluid increases, eventually, the pressure in the internal passage 44 becomes lower than the surrounding atmospheric pressure due to the action of the throttling part 43. Of course, as the pressure decreases, ambient air continuously flows into the internal passage 44. In this sense, the intake casing 40 operates on the basis of venturi principle. In other words, the intake casing 40 is of a venturi type. The shape of the intake casing 40 can be variously changed.

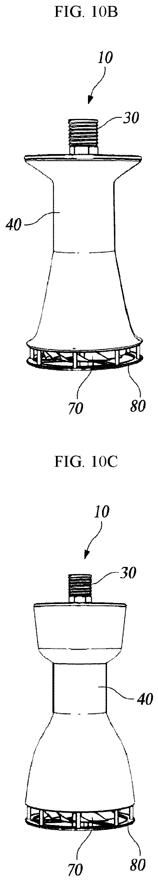

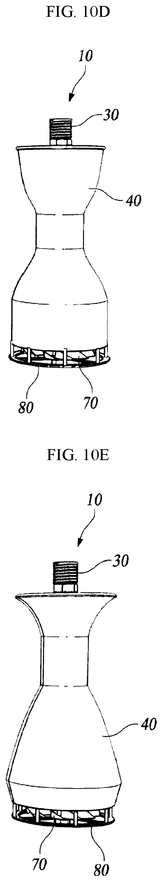

For example, it may have various designs shown in FIGS. 10A to 10E. Referring to FIGS. 10A to 10E, it can be seen that the intake casing 40 is formed in various shapes. However, every intake casing 40 has the inlet part 41, the outlet part 42, and the throttling portion 43, and the throttling portion 43 is located between the inlet part 41 and the outlet part 42.

Meanwhile, the introducing-spray nozzle 30, which sprays into the intake casing 40 the water supplied through the water supply line 107, is secured to the inlet part 41 of the intake casing 40 via the nozzle holder 20.

The nozzle holder 20 includes a casing fixing ring 21, a nozzle fixing ring 22, and a strut 23. The casing fixing ring 21 is a ring-shaped member fixed to the inlet part end of the intake casing 40. The casing fixing ring 21 may be fixed to the intake casing 40 by welding. The nozzle fixing ring 22 is a member connected to the casing fixing ring 21 through the strut 23, and accommodates and supports the introducing-spray nozzle 30. The strut 23 is a linear member supporting the nozzle fixing ring 22, and may have a shape of a blade for guiding the flow of inflow air.

The introducing-spray nozzle 30 has a substantially cylindrical shape, and has a spray hole 31 (see FIG. 8) on a central axis. The spray hole 31 is a passage through which the water supplied through the water supply line 107 is jetted into the internal passage 44.

In addition, a coupling portion 32 and an inward extension portion 33 are provided on the outer circumferential surface of the introducing-spray nozzle 30. The coupling portion 32 is a portion screwed with the coupling nut 107a at the end of the water supply line 107.

Also, the inward extension portion 33 is a portion extending into the internal passage 44, and has an outer circumferential helical groove 33a on its outer circumferential surface. The outer circumferential helical groove 33a is a groove that guides in a helical shape the flow of air suctioned into the intake casing 40. The air flowing into the internal passage 44 collides against the inward extension portion 33 and is guided by the outer circumferential helical groove 33a.

The swirl guide part 50 serves to form a swirling flow while mixing the water sprayed from the introducing-spray nozzle 30 and the air suctioned through the inlet part 41. That is, it mixes the water sprayed in a straight line through the spray hole 31 and air flowing in a whirlwind, and at the same time, guides the streamline of the mixed fluid (i.e., a fluid in which water and air have been mixed) in a helical shape.

The swirl guide part 50 is a ring-shaped member obtained by pressing a metal strip having a certain width and thickness and then rolling it to join both ends, and includes a fixing band 51 (see FIG. 9) and a guide vane 53. The fixing band 51 is fixed to the inner wall surface of the throttling part 43, and supports the guide vane 53. The guide vane 53 protrudes into the inside of the fixing band 51, and guides the flow of the mixed fluid. The mixed fluid accelerated while passing through the throttling part 43 is swirled while being guided by the guide vane 53. The water mixed with the air passing through the swirl guide part 50 collides against the impeller 70 to transfer kinetic energy to the impeller.

The impeller 70 is installed at the outlet part of the intake casing 40, is rotated by receiving the kinetic energy of the water passing through the internal passage 44, jets the water out of the outlet, and serves to expand the spray radius by imparting centrifugal force to the water. The spray radius means a spreading radius of the water sprayed from the composite nozzle device 10. The wider the spray radius, the wider the water spreads. It is natural that as the spray radius increases, the contact area between the ambient air and water increases.

The impeller 70 includes a center hub 72 and a plurality of blades 73. The center hub 72 has a shaft hole 72a in a central axle part. The shaft hole 72a is a hole passing through the center hub 72, and receives a support shaft 65. The blade 73 is a wing integrally formed with the outer circumference of the center hub 72, and obtains rotational force from the collision against the water. Eventually, the kinetic energy of the mixed fluid which has passed through the throttling part 43 is transferred to the impeller 70 to rotate the impeller 70. As the impeller 70 rotates, an additional suction force is naturally generated inside the intake casing 40. The mixed fluid is jetted as wide as possible in the radial direction under the action of the centrifugal force of the impeller 70.

In particular, as shown in FIG. 5, the impeller 70 is partially exposed to the outside of the outlet part 42 of the intake casing 40. The reason for exposing the impeller 70 in this way is to prevent the mixed fluid spreading laterally by the centrifugal force of the impeller 70 from colliding with the inner wall surface of the intake casing 40.

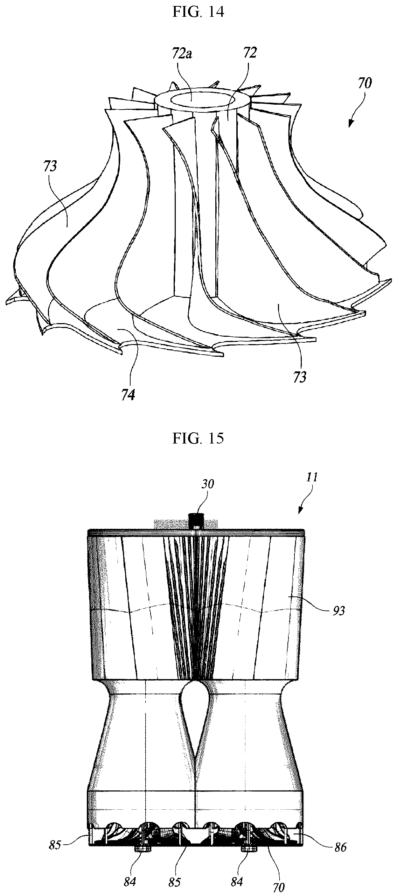

The design of the impeller 70 can be changed in various ways, and, for example, a reflecting plate 74 as shown in FIG. 14 may be applicable.

The impeller 70 shown in FIG. 14 includes the center hub 72 having the shaft hole 72a, the plurality of blades 73 formed symmetrically about the center hub 72, and the reflecting plate 74 fixed to the lower part of the blades 73. The reflecting plate 74 serves to spread most of the mixed fluid in the radial direction by the blade 73. The impeller 70 having such structure is used when the spray radius of water needs to be further expanded. For example, as shown in FIG. 2, it is useful when spraying water downward.

The impeller support rotatably supports the impeller 70, and includes the support shaft 65, a first supporter 60, and a second supporter 80.

The support shaft 65 is a shaft inserted into the shaft hole 72a of the center hub 72, and is maintained fixed to the central shaft part of the intake casing 40 by the first and second supporters 60 and 80. The support shaft 65 is separated from the shaft hole 72a, but supports the impeller 70 rotatably.

The first supporter 60 has a fixing ring 61, a shaft support ring 62, and a connecting rod 63. The fixing ring 61 is a ring-shaped member having a certain diameter, and is fixed to the inner wall surface of the intake casing 40. The shaft support ring 62 is a member that supports the support shaft 65, allowing it to penetrate therethrough, and is connected to the fixing ring 61 through the connecting rod 63. The connecting rod 63 may have a shape of a blade for guiding the flowing mixed fluid.

The second supporter 80 has a fixing ring 81, a hub support 83, a strut 82, and a spacing pin 85. The fixing ring 81 is a ring-shaped member, and is spaced apart from the outlet part 42 to provide a lateral passage 86 between itself and the outlet part. The lateral passage 86 is a passage through which the mixed fluid passes to be jetted laterally by the impeller 70.

The hub support 83 serves to support the center hub 72 while being coupled to the other end of the support shaft 65. That is, it is to prevent the impeller 70 from being separated from the intake casing 40. Reference numeral 84 refers to a fixing nut that couples the hub support 83 and the support shaft 65.

The strut 82 is a rod-like member connecting the hub support 83 and the fixing ring 81. The strut 82 may have a shape of a blade to guide a streamline of the mixed fluid jetted through the impeller (fluid other than the mixed fluid flowing into the lateral passage).

The spacing pin 85 is a part that connects the intake casing 40 and the fixing ring 81. The spacing pins 85 are spaced apart at regular intervals in the circumferential direction of the fixing ring 81, and fix the fixing ring 81 to the intake casing 40.

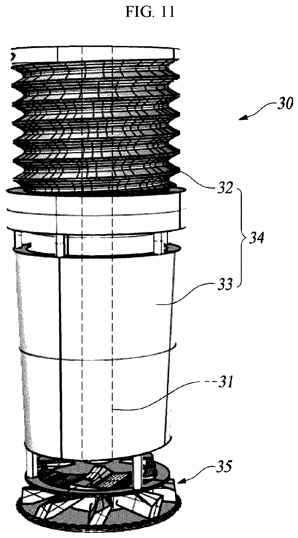

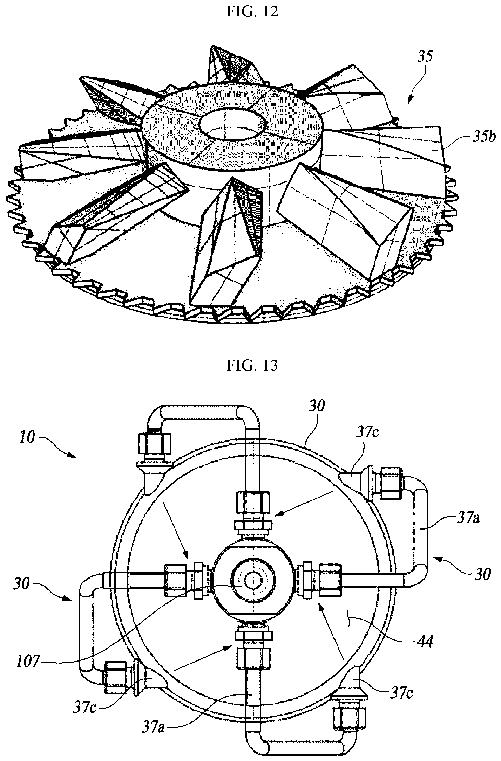

FIG. 11 is a perspective view showing a modified example of the introducing-spray nozzle 30 applicable to the composite nozzle device shown in FIG. 4, and FIG. 12 is a perspective view of a rotary plate of FIG. 11.

The introducing-spray nozzle 30 shown in FIG. 11 includes a nozzle body 34 and a rotary plate 35. The nozzle body 34 provides the spray hole 31 in the central axle part, and has the coupling portion 32 and the inward extension portion 33.

The coupling portion 32 is a male threaded portion coupled to the coupling nut 107a of the water supply line 107. In addition, the inward extension portion 33 is a portion integrally formed with the coupling portion 32 and extending into the intake casing 40. The water which has passed through the nozzle body 34 collides against the rotary plate 35.

The rotary plate 35 has a plurality of pressurization blades 35b to which the kinetic energy is transferred from the water sprayed through the nozzle body 34. The pressurization blades 35b have an inclined shape, and convert the kinetic energy of the water into rotational force.

FIG. 13 is a plan view showing an introducing-spray nozzle 30 having another structure. The plan view is based on an angle at which the inlet part 41 is viewed.

The introducing-spray nozzle 30 shown in FIG. 13 includes four branch pipes 37a and four inward spray tips 37c, each of which is mounted on an end of each branch pipe 37a.

The branch pipe 37a is a tube connected to the end of the water supply line 107, and its extended end faces the internal passage 44 of the intake casing 40. The inward spray tip 37c serves as a nozzle for jetting the water which has passed through the branch pipe 37a. The water jetted through the inward spray tip 37c is swirled within the intake casing 40, is mixed with air, and then is moved toward the impeller 70.

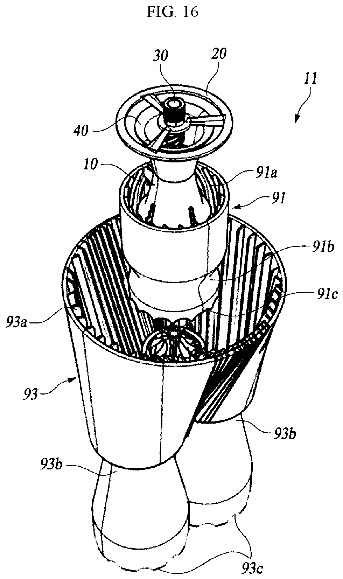

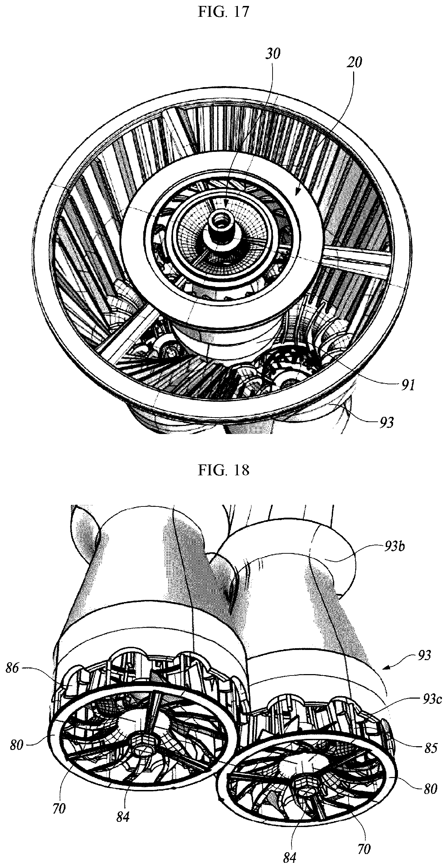

FIG. 15 is a side view showing a modified example of a venturi-type composite nozzle device 11 for suctioning and removing air pollutants according to an embodiment of the present disclosure; FIG. 16 is an exploded perspective view of the composite nozzle device shown in FIG. 15; FIG. 17 is a view showing the inlet part of the composite nozzle device of FIG. 15; and FIG. 18 is a perspective view showing the outlet part of the composite nozzle device of FIG. 15.

As shown, the modified composite nozzle device 11 includes a first venturi housing 91 and a second venturi housing 93 which surround the composite nozzle device 10 described above.

The first venturi housing 91 is a venturi tube having an inlet part 91a, an outlet part 91c, and a throttling part 91b. The first venturi housing 91 accommodates the afore-explained composite nozzle device 10 so that the outlet part 91c is located in its throttling part 91b. Therefore, the mixed fluid sprayed through the outlet part 91c is accelerated once more while passing through the throttling part 91b. Accordingly, a pressure drop also occurs inside the first venturi housing 91, and outside air flows in through the inlet part 91a. The air passing through the first venturi housing 91 is also mixed with the water of the mixed fluid which has passed through the intake casing 40.

The second venturi housing 93 is a venturi tube accommodating and surrounding the first venturi housing 91, and has one inlet part 93a, two throttling parts 93b, and two outlet parts 93c. The second venturi housing 93 accommodates the first venturi housing 91 so that the outlet part 91c of the first venturi housing 91 is as close to its throttling part 93b as possible. The mixed fluid which has passed through the first venturi housing 91 is accelerated while passing through the two throttling parts 93b, and then exits through the outlet parts 93c.

The impeller 70 and the first and second supporters 60 and 80 are installed at both outlet parts of the second venturi housing 93. The constructions and roles of the first and second supporters and impellers are the same as those described above. When the first and second venturi housings 91 and 93 are applied, the impeller inside the intake casing 40 can be omitted.

In the above, embodiments specifically realizing the technical idea of the present disclosure have been described. However, it should be noted that the technical scope of the present disclosure is not limited to the embodiments and drawings described above, but is determined by reasonable interpretation of the claims.

## Claims

1. A venturi-type composite nozzle device for suctioning and removing air pollutants, the device comprising:
a venturi-type intake casing which includes an inlet part, an outlet part, and a throttling part and which causes an internal pressure drop while water passes therethrough, thereby suctioning external air thereinto;
an introducing-spray nozzle which is provided at the inlet part of the intake casing and sprays water, which is supplied from the outside, into the intake casing; and
an impeller which is provided at the outlet part of the intake casing, rotates by receiving kinetic energy of water having passed through the intake casing, jets the water to the outside of the outlet part, and applies centrifugal force to the water to expand a spray radius.

2. The venturi-type composite nozzle device of claim 1, wherein the intake casing further comprises a swirl guide part which forms swirling flow by mixing the water sprayed from the introducing-spray nozzle and the suctioned air.

3. The venturi-type composite nozzle device of claim 2, wherein the swirl guide part has a ring shape, and comprises a fixing band fixed to an inner wall surface of the intake casing, and a guide vane protruding inside the fixing band to guide a flow of fluid.

4. The venturi-type composite nozzle device of claim 1, wherein the introducing-spray nozzle is fixed to the inlet part of the intake casing via a nozzle holder, and comprises an outer circumferential helical groove which is provided on an outer circumferential surface thereof and guides a flow of air suctioned into the intake casing in a helical shape.

5. The venturi-type composite nozzle device of claim 1, wherein the introducing-spray nozzle comprises a nozzle body having a coupling portion connected to an external water supply line and an inward extension portion integral with the coupling portion and extending into the intake casing, and a rotary plate which is rotated by receiving the pressure of water which has passed through the nozzle body.

6. The venturi-type composite nozzle device of claim 1, wherein the impeller comprises a center hub having a shaft hole, and a plurality of blades integrally formed on an outer circumference of the center hub and obtaining rotational force from the collision of water.

7. The venturi-type composite nozzle device of claim 6, further comprising an impeller support for rotatably supporting the impeller,
wherein the impeller support comprises:
a support shaft inserted into the shaft hole to rotatably support the impeller;
a first supporter fixed to the intake casing and supporting the support shaft; and
a second supporter supporting the center hub of the impeller.

8. The venturi-type composite nozzle device of claim 7, wherein the second supporter comprises:
a fixing ring which has a shape of a ring and is spaced apart from the outlet part so that a lateral passage is formed between the outlet part and the fixing ring, and which has a hub support at the center thereof for providing a supporting force to the center hub; and
a plurality of spacing pins connecting the fixing ring to the intake casing.

9. The venturi-type composite nozzle device of claim 1 further comprising:
a first venturi housing accommodating the intake casing and having an inlet part, an outlet part, and a throttling part; and
a second venturi housing accommodating the first venturi housing.

10. The venturi-type composite nozzle device of claim 9, wherein the impeller is located at the outlet part of the second venturi housing.
